# FASCICULE DE BREVET EUROPEEN

(11) **EP 1 582 190 B1**
(45) Date de publication et mention de la délivrance du brevet: **26.09.2007**
(21) Numéro de dépôt: 05290683.1
(22) Date de dépôt: 29.03.2005
(51) Int. Cl.: A47C 20/04

(54) **Appareil de repos pour un patient**
Stützvorrichtung für Patienten
Rest device for a patient

(30) Priorité: 30.03.2004 FR 0403268
(43) Date de publication de la demande: 05.10.2005
(73) Titulaire: Hill-Rom S.A.S., 56330 Pluvigner (FR)
(72) Inventeur: Cresson, Thierry, 56300 Bieuzy Lanvaux (FR); Legros, Philippe, 56400 Pluneret (FR); Samson, Jimmy, 56400 St Anne d'Auray (FR)
(74) Mandataire: Barbin le Bourhis, Joël

(56) Documents cités:
- GB-A- 1 124 725
- US-A- 3 222 693
- US-A- 4 660 817
- US-A- 5 926 002
- US-A1- 2003 195 644

## Description

L'invention se rapporte à un appareil de repos pour un patient, comme par exemple un lit ou un fauteuil, susceptible d'équiper une chambre d'hôpital, du type comportant une partie mobile verticalement, à déplacement commandé. Elle concerne plus particulièrement un perfectionnement permettant de sécuriser la commande des déplacements d'une telle partie mobile tout en optimisant l'ergonomie pour le personnel soignant.

Dans le domaine hospitalier ou dans les centres de soins pour personnes handicapées, l'usage de lits ou de fauteuils réglables en hauteur est de plus en plus apprécié. Par exemple, un lit de ce genre peut comporter une partie mécanique supportant la literie (sommier et matelas) mobile verticalement sous l'action d'un vérin ou d'un autre système mécanique commandé. Les déplacements, obtenus par exemple par actionnement d'un moteur électrique, sont commandés par une pédale située au pied du lit. Un tel système permet de lever le lit à une hauteur convenable pour l'administration des soins. En dehors d'une intervention du personnel soignant, le lit est ramené et reste en position basse, c'est-à-dire à la hauteur normale d'un lit d'hôpital. Les mêmes fonctionnalités sont applicables à un fauteuil ou à d'autres appareils semblables.

Cependant, il peut arriver qu'en voulant se lever, le patient actionne par inadvertance la pédale et provoque un mouvement du lit, susceptible de lui nuire plus ou moins gravement. C'est pourquoi, il est nécessaire de « verrouiller » cette pédale, c'est-à-dire d'inhiber ses fonctions en dehors des périodes d'intervention du personnel soignant.

US 4,660,817 décrit un dispositif de ce genre mais qui n'est pas satisfaisant du point de vue de la sécurité.

L'invention apporte une solution ergonomique à ce problème.

Plus particulièrement, l'invention concerne un appareil de repos pour patient, comme par exemple un lit, du type comportant une partie mobile verticalement, à déplacement commandé par une pédale agencée pour élaborer des ordres de déplacement de ladite partie mobile, caractérisé en ce qu'il comporte en outre un levier de validation coopérant avec un capteur de validation connecté pour élaborer un ordre de validation temporisé desdits ordres de déplacement, en ce que ladite pédale est installée à une certaine distance du sol et en ce que ledit levier de validation est agencé sous ladite pédale, pour être proche de celle-ci afin de pouvoir être actionnée au pied, sans cependant être directement accessible.

Le levier de validation étant situé au voisinage de la pédale, le soigneur peut gérer les mouvements du lit aussi bien que le déverrouillage de la pédale uniquement « au pied ». Ceci constitue un avantage appréciable, le soigneur devant généralement apporter un plateau sur lequel sont disposés tous les produits et ustensiles nécessaires aux soins.

Selon un mode de réalisation avantageux, la pédale est installée à une certaine distance du sol, en étant par exemple fixée en partie basse du lit lui-même et le levier de validation est agencé sous ladite pédale. De cette façon, le levier de validation peut être actionné par soulèvement du pied. Cet actionnement commande le déverrouillage des moyens de commande des mouvements du lit pendant un temps prédéterminé, par exemple de l'ordre d'une minute, après quoi le verrouillage de la pédale est réinstauré automatiquement jusqu'à un nouvel actionnement du levier de validation.

Bien entendu, le verrouillage peut être réinstauré plus tôt sur commande spécifique du soigneur, par exemple en réactionnant le levier avant la fin dudit temps prédéterminé.

Dans le mode de réalisation préféré où la pédale et le levier de validation sont articulés de part et d'autre d'un socle commun, ce dernier porte les capteurs précités qui peuvent être en l'espèce de simples contacteurs électriques.

L'invention sera mieux comprise et d'autres avantages de celle-ci apparaîtront plus clairement à la lumière de la description qui va suivre d'un appareil conforme à son principe, donnée uniquement à titre d'exemple et faite en référence aux dessins annexés dans lesquels :
- la figure 1 est une vue schématique montrant les parties essentielles d'un lit d'hôpital conforme à l'invention ;
- la figure 2 est une vue en coupe de la pédale ;
- la figure 3 est une coupe III-III de la figure 2 ;
- la figure 4 est une vue analogue à la figure 3 avec le levier de validation actionné ; et
- la figure 5 est un schéma bloc illustrant, à titre d'exemple, la commande des moyens de levage du lit, conformément aux principes de l'invention.

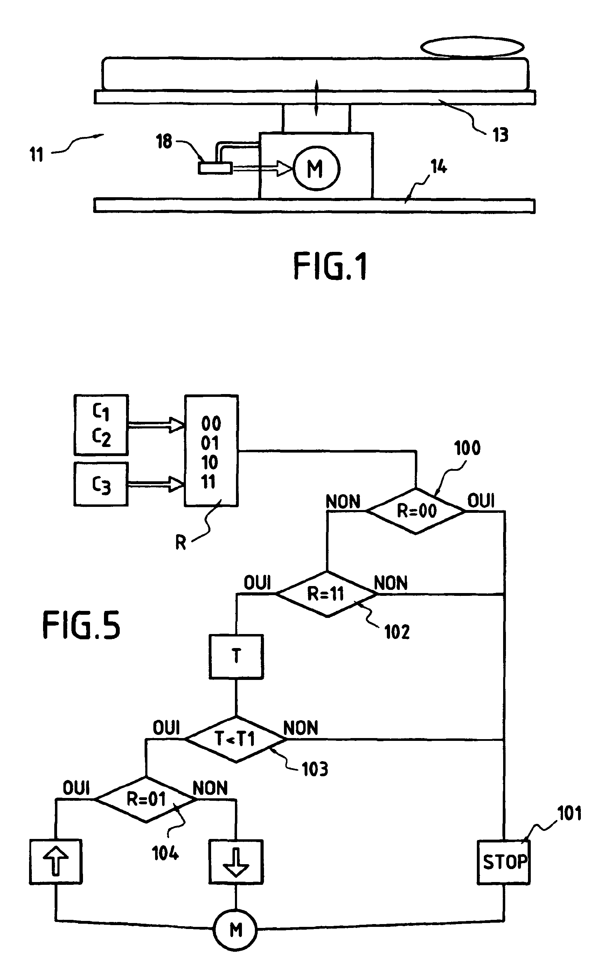

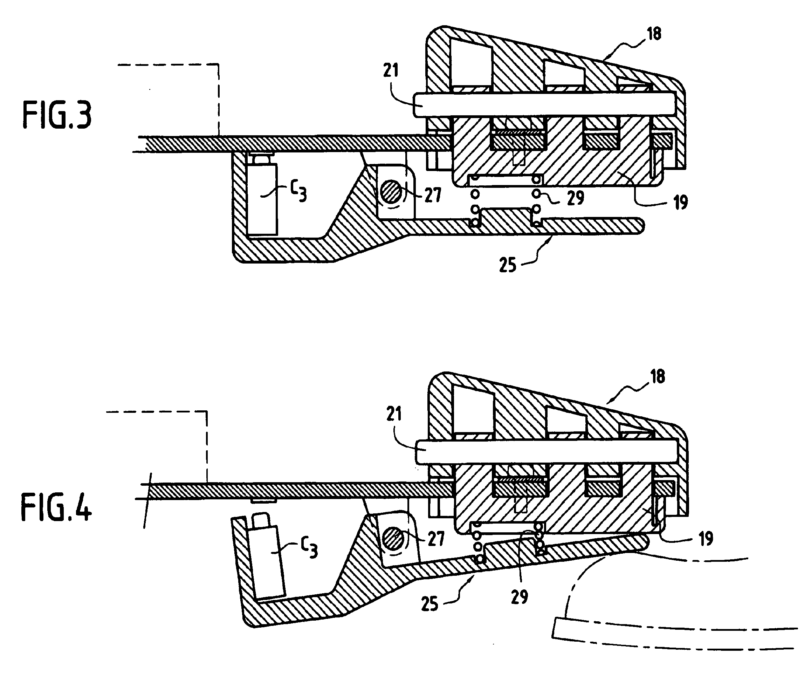

En se référant plus particulièrement aux figures 1 à 4, on a représenté un lit d'hôpital 11 comportant une partie 13 mobile verticalement par rapport à une embase 14 reposant sur le sol. La partie mobile porte la literie. Les déplacements peuvent être assurés par un ou plusieurs vérins mécaniques, actionnés par un moteur électrique M commandé. La commande du moteur est assurée par une pédale 18 articulée à un socle 19 fixé à l'embase du lit ou à une autre partie fixe, à une certaine distance du sol. La pédale 18 est articulée par rapport au socle 19 autour d'un axe 21 et peut basculer à droite ou à gauche par rapport audit socle. En dehors de tout actionnement du pied, des ressorts 23 maintiennent la pédale en position horizontale, neutre, pour laquelle aucun déplacement de la partie mobile n'est possible. Deux capteurs C1 et C2 sont portés par le socle et sont susceptibles d'être actionnés par la pédale lorsque celle-ci est sollicitée. Comme on le verra plus loin, ces capteurs permettent d'élaborer différents états possibles correspondant à une position de repos ou à des ordres de montée ou de descente de la partie mobile du lit.

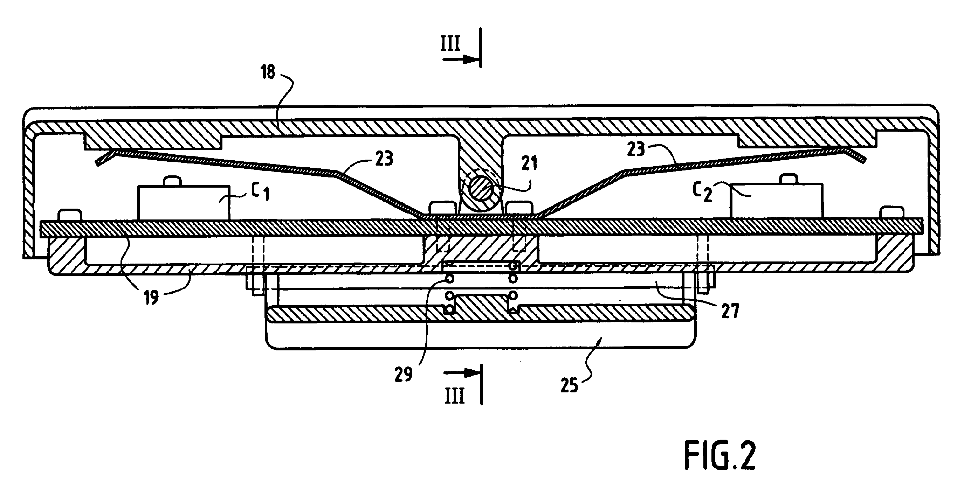

Selon l'invention, on prévoit en outre un levier de validation 25 agencé au voisinage de la pédale et coopérant avec un capteur de validation C3 connecté à un système de gestion électronique, non représenté, pour élaborer un ordre de validation temporisé desdits ordres de déplacement. Les ordres de déplacement et l'ordre de validation sont élaborés par un logiciel du système de gestion recevant des informations engendrées par les trois capteurs C1, C2 et C3. Comme on le voit sur les dessins, le socle 19 est commun à la pédale 18 et au levier de validation 25 et ce dernier est agencé sous la pédale et plus particulièrement ici sous le socle 19 en sorte qu'il n'est pas directement accessible. Ledit levier de validation est cependant à une certaine hauteur au dessus du sol ; ainsi il peut être actionné par exemple par soulèvement du pied. Il est articulé au socle par un axe 27 perpendiculaire à l'axe 21 d'articulation de la pédale. De plus, comme on le voit sur la figure 2, le levier porte le capteur C3 à l'origine de l'élaboration de l'ordre de validation temporisé. Dans l'exemple décrit, les capteurs C1 et C2 sont des contacteurs électriques à contact normalement ouvert tandis que le capteur C3 est un contacteur électrique à contact normalement fermé. Un ressort 29 est intercalé entre le socle 19 et le levier de validation 25 pour que celui-ci actionne, en position de repos, le contacteur constituant le capteur C3. En position de repos, le contacteur C3 est maintenu ouvert. Il se ferme lorsque le levier de validation est actionné du bout du pied.

Ainsi, le levier de validation 25 et la pédale 18 sont montés articulés audit socle fixe 19, de part et d'autre de celui-ci.

En considérant maintenant plus particulièrement la figure 5, on va maintenant décrire le fonctionnement du logiciel chargé d'exploiter les informations récoltées par les capteurs C1, C2 et C3 pour commander ou inhiber le moteur électrique M assurant le déplacement vertical de la partie mobile 13 du lit. Les informations prélevées par les capteurs C1, C2 et C3 permettent de positionner un registre R à deux variables binaires donnant quatre états possibles. L'état 00 correspond à l'absence de tout actionnement sur la pédale ou le levier de validation. L'état 01 correspond à un actionnement de la pédale 18 signifiant la volonté de lever le lit, l'état 10 correspond à un actionnement de la pédale 18 signifiant la volonté de baisser le lit et l'état 11 correspond à un actionnement du levier de validation. L'état du registre R permet de mettre en oeuvre la procédure de validation et de commande symbolisée par les tests suivants.

Tant que R = 00 (test 100) le système est bloqué (état 101) et le moteur ne peut être actionné. Si l'état du registre R change, on passe au test 102 où on vérifie si R = 11. Si le test 102 est négatif, on reste à l'état 101. Si le test 102 est positif, on initialise un compteur de temps T et on passe au test 103. Tant que T reste inférieur à une valeur T1 (par exemple 1 minute) on passe au test 104 où on vérifie si R = 01.

Si la réponse au test 104 est positive, le moteur est commandé pour élever la partie mobile du lit et si la réponse au test 104 est négative, le moteur est commandé dans l'autre sens pour abaisser la partie mobile du lit.

Lorsque le test 103 devient négatif on repasse à l'état 101 et le moteur ne peut plus être commandé tant qu'un opérateur n'a pas à nouveau actionné le levier de validation 25.

Tant que le test 103 est positif, un nouveau changement d'état de C3 provoque le passage du registre R à l'état 00.

## Revendications

1. Appareil de repos pour patient, comme par exemple un lit, du type comportant une partie (13) mobile verticalement, à déplacement commandé par une pédale (18) agencée pour élaborer des ordres de déplacement de ladite partie mobile, qui comporte en outre un levier de validation (25) coopérant avec un capteur de validation (C3) connecté pour élaborer un ordre de validation temporisé desdits ordres de déplacement, **caractérisé en ce que** ladite pédale (18) est installée à une certaine distance du sol et **en ce que** ledit levier de validation est agencé sous ladite pédale, pour être proche de celle-ci afin de pouvoir être actionné au pied, sans cependant être directement accessible.

2. Appareil selon la revendication 1, **caractérisé en ce que** ledit levier de validation se trouve à une certaine hauteur au dessus du sol pour être actionné par soulèvement du pied.

3. Appareil selon l'une des revendications précédentes, **caractérisé en ce que** ladite pédale et ledit levier de validation sont articulés à un socle commun (19).

4. Appareil selon la revendication 3, **caractérisé en ce que** ledit levier de validation et ladite pédale sont articulés audit socle (19) de part et d'autre de celui-ci.

5. Appareil selon la revendication 4, **caractérisé en ce que** les axes d'articulation (21, 27) de ladite pédale et dudit levier de validation sont perpendiculaires.

## Claims

1. Rest device for a patient, such as for example a bed, of the type comprising a vertically movable part (13), the movement of which is controlled by a pedal (18) designed to generate commands for movement of said movable part, which further includes a validation lever (25) cooperating with a validation sensor (C3) connected so as to generate a delayed command for validating said movement commands, **characterized in that** said pedal (18) is installed at a certain distance from the ground and **in that** said validation lever is placed beneath said pedal, in order to be close to the latter so as to be able to be actuated by a foot without, however, being directly accessible.

2. Device according to Claim 1, **characterized in that** said validation lever is at a certain height above the ground in order to be actuated by raising one's foot.

3. Device according to either of the preceding claims, **characterized in that** said pedal and said validation lever are hinged to a common baseplate (19).

4. Device according to Claim 3, **characterized in that** said validation lever and said pedal are hinged to said baseplate (19) on either side of the latter.

5. Device according to Claim 4, **characterized in that** the hinge pins (21, 27) of said pedal and of said validation lever are perpendicular to each other.

## Patentansprüche

1. Ruhegerät für Patienten, wie zum Beispiel ein Bett, vom Typ umfassend einen vertikal beweglichen Teil (13), dessen Bewegung über ein Pedal (18) gesteuert wird, welches angeordnet ist, um Befehle zum Bewegen des beweglichen Teils zu erzeugen, wobei es ferner einen Freigabehebel (25) umfaßt, der mit einem Freigabesensor (C3) zusammenwirkt, welcher geschaltet ist, um einen verzögerten Freigabebefehl der Bewegungsbefehle zu erzeugen, **dadurch gekennzeichnet, daß** das Pedal (18) in einem gewissen Abstand vom Boden angebracht ist und daß der Freigabehebel unter dem Pedal angeordnet ist, um in dessen Nähe zu sein, damit er mit dem Fuß betätigt werden kann, ohne jedoch direkt zugänglich zu sein.

2. Gerät nach Anspruch 1, **dadurch gekennzeichnet, daß** sich der Freigabehebel in einer gewissen Höhe über dem Boden befindet, um durch Anheben des Fußes betätigt zu werden.

3. Gerät nach einem der vorhergehenden Ansprüche, **dadurch gekennzeichnet, daß** das Pedal und der Freigabehebel an einem gemeinsamen Sockel (19) angelenkt sind.

4. Gerät nach Anspruch 3, **dadurch gekennzeichnet, daß** der Freigabehebel und das Pedal auf beiden Seiten des Sockels (19) an diesem angelenkt sind.

5. Gerät nach Anspruch 4, **dadurch gekennzeichnet, daß** die Gelenkachsen (21, 27) des Pedals und des Freigabehebels senkrecht verlaufen.
